# FASCICULE DE BREVET EUROPEEN

(11) **EP 3 325 999 B1**
(45) Date de publication et mention de la délivrance du brevet: **22.05.2019**
(21) Numéro de dépôt: 16734591.7
(22) Date de dépôt: 23.06.2016
(51) Int. Cl.: G01S 13/90, G01S 7/295

(54) **PROCEDE DE COMPRESSION ET DE DE COMPRESSION D'UNE IMAGE SAR ET RADAR APTE A METTRE EN OEUVRE UN TEL PROCEDE**
VERFAHREN ZUM KOMPRIMIEREN UND DEKOMPRIMIEREN EINES SAR-BILDES UND RADAR ZUR IMPLEMENTIERUNG SOLCH EINES VERFAHRENS
METHOD FOR COMPRESSING AND DECOMPRESSING AN SAR IMAGE AND RADAR CAPABLE OF IMPLEMENTING SUCH A METHOD

(30) Priorité: 24.07.2015 FR 1501591
(43) Date de publication de la demande: 30.05.2018
(73) Titulaire: Thales, 92400 Courbevoie (FR)
(72) Inventeur: GARREC, Patrick, 33700 Merignac (FR); CORRETJA, Vincent, 33600 Pessac (FR); NOUVEL, Myriam, 78990 Elancourt (FR)
(74) Mandataire: Lucas, Laurent Jacques
(86) Numéro de dépôt international: PCT/EP2016/064502
(87) Numéro de publication internationale: WO 2017/016764

(56) Documents cités:
- US-A1- 2014 152 770
- Group Members ET AL: "EE678 WAVELETS APPLICATION ASSIGNMENT 1 SAR Image compression Using JPEG-2000", , 1 avril 2005 (2005-04-01), XP055270656, Extrait de l'Internet: URL:https://www.ee.iitb.ac.in/uma/~pawar/W avelet Applications/Wavelet Applications in Data Compression/SAR Image compression Using JPEG-2000.pdf [extrait le 2016-05-04]
- HADDOUD A ET AL: "Hybrid approach for georeferencing RadarSat2 images", DIGITAL INFORMATION AND COMMUNICATION TECHNOLOGY AND IT'S APPLICATIONS (DICTAP), 2012 SECOND INTERNATIONAL CONFERENCE ON, IEEE, 16 mai 2012 (2012-05-16), pages 130-134, XP032185940, DOI: 10.1109/DICTAP.2012.6215368 ISBN: 978-1-4673-0733-8
- LUTTRELL S P ED - CALDERARA SIMONE ET AL: "IMAGE COMPRESSION USING A MULTILAYER NEURAL NETWORK", PATTERN RECOGNITION LETTERS, ELSEVIER, AMSTERDAM, NL, vol. 10, no. 1, 1 juillet 1989 (1989-07-01), pages 1-07, XP000032607, ISSN: 0167-8655, DOI: 10.1016/0167-8655(89)90011-1 cité dans la demande
- AILI WANG ET AL: "SAR Image Compression with Vector Quantization of Wavelet Trees at Low Bit Rates", WIRELESS COMMUNICATIONS, NETWORKING AND MOBILE COMPUTING, 2009. WICOM '09. 5TH INTERNATIONAL CONFERENCE ON, IEEE, PISCATAWAY, NJ, USA, 24 septembre 2009 (2009-09-24), pages 1-4, XP031555140, ISBN: 978-1-4244-3692-7 cité dans la demande
- ROBERT A BAXTER: "SAR Image Compression with the Gabor Transform", IEEE TRANSACTIONS ON GEOSCIENCE AND REMOTE SENSING, IEEE SERVICE CENTER, PISCATAWAY, NJ, US, vol. 37, no. 1, 1 janvier 1999 (1999-01-01), XP011021146, ISSN: 0196-2892 cité dans la demande

## Description

La présente invention concerne un procédé de compression et de décompression d'une image SAR.
L'invention s'applique par exemple pour des images SAR obtenues par des radars embarqués sur des drones ou des OPV (Optionaly Piloted Vehicle).
L'invention concerne également un radar apte à mettre en oeuvre un tel procédé.

Les images SAR élaborées par des radars aéroportés, notamment sur des drones, sont transmises vers des stations sol par des liaisons adaptées. La grande quantité d'informations transmises, correspondant notamment aux données des images SAR pose des problèmes de transmission et de saturation de ces liaisons, en d'autres termes la bande passante de ces liaisons est limitée. La ressource en fréquence est en effet limitée à cause du nombre croissant des utilisateurs de cette ressource et des services qui y sont associés.
Une solution connue consiste à réaliser une compression des images SAR. Plusieurs techniques connues de compressions sont utilisées à cet effet. On peut notamment citer les techniques de compression décrites dans les documents de F. A. Sakarya and S. Emek, "SAR Image Compression," IEEE Conférence Record of the Thirtieth Asilomar Conférence on Signals, Systems and Computers, Vol. 2, pp. 858-862, 1996, de F. A. Sakarya, W. Dong and S. Emek, "An Evaluation of SAR Image Compression Techniques," IEEE International Conférence on Acoustics, Speech and Signal Processing, Vol. 4, pp. 2833-2836, 1997, de W. Aili and Y. Mingji, "SAR Image Compression with Vector Quantization of Wavelet Trees at Low Bit Rates," Proceedings of the IEEE International Conférence on Wireless Communications, Networking and Mobile Computing, pp. 1-4, 2009, de S. P. Luttrell, "Image compression using a multilayer neural network," Pattern Recognition Letters, Vol. 10, n°1, pp. 1-7, 1989 ou encore de R. A. Baxter, "SAR Image Compression with the Gabor Transform," IEEE Transactions on Geoscience and Remote Sensing, Vol. 37, n° 1, 1999.

Ces compressions ont notamment comme inconvénient qu'elles nécessitent une formation importante et coûteuse des opérateurs pour interpréter les images transmises. En effet, les solutions actuelles tendent à reconstituer les images et les informations sans prise en compte du contexte extérieur. En particulier, un opérateur dispose de deux images de la même zone à différentes échelles et hétérogènes. Il est donc difficile pour lui d'exploiter l'ensemble des informations apportées et d'en extraire les informations essentielles. Par ailleurs, il doit souvent porter son attention sur un écran puis sur un autre, perdant en efficacité et augmentant la pénibilité de la tâche.
Un document US 2014/0152770 A1 décrit un procédé de compression et de décompression d'une image.

Un but de l'invention est de pallier les inconvénients précités tout en permettant une transmission des données d'images SAR dans une bande de fréquence limitée.
A cet effet, l'invention a pour objet un procédé de compression et de décompression d'une image SAR produite par un radar embarqué sur un aéronef, pour la transmission de ladite image compressée vers un système reproduisant ladite image, ledit procédé utilisant un premier fichier de référence embarqué dans ledit aéronef et comportant des données représentatives connues a priori du domaine couvert par ladite image, un deuxième fichier de référence comportant au moins les mêmes données représentatives étant accessibles audit système, ledit procédé réalisant :
- dans une première étape, un changement de format de ladite image pour la rendre apte à être comparée aux données représentatives ;
- dans une deuxième étape, une comparaison de ladite image avec lesdites données représentatives embarquées pour former une image différentielle constituée de la différence entre les données de ladite image et lesdites données représentatives ;
l'image compressée transmise vers ledit système étant ladite image différentielle, l'image décompressée produite par ledit système étant constituée à partir des mêmes données représentatives accessibles audit système et de ladite image différentielle.

Ledit changement de format se fait par le codage de l'image SAR par rapport à une image de référence issue des données représentatives par transformation en niveau de gris de l'image SAR puis par application d'un Laplacien sur les deux images et par ajustement d'échelle.

Au moins une partie des données représentatives sont par exemple des données d'un modèle numérique de terrain MNT.

Au moins une partie des données représentatives sont par exemple des données fournies par un moteur de recherche.

Ledit procédé définit par exemple la résolution de ladite image décompressée en fonction desdites données représentatives connues a *priori.*

Dans un mode de mise en oeuvre possible, ledit système est au sol.

Ladite image différentielle peut en outre être compressée par une autre méthode de compression.

L'invention concerne également un radar apte à mettre en oeuvre le procédé tel que précédemment décrit.

D'autres caractéristiques et avantages de l'invention apparaîtront à l'aide de la description qui suit, faite en regard de dessins annexés qui représentent :
- La figure 1, une illustration du principe du procédé selon l'invention ;
- La figure 2, une illustration de la compression et de la décompression effectuées selon l'invention ;
- La figure 3, un exemple de chaîne de traitement mise en oeuvre de l'étape de comparaison du procédé selon l'invention ;
- La figure 4, un exemple d'application d'une compression selon l'invention à une image électro-optique.

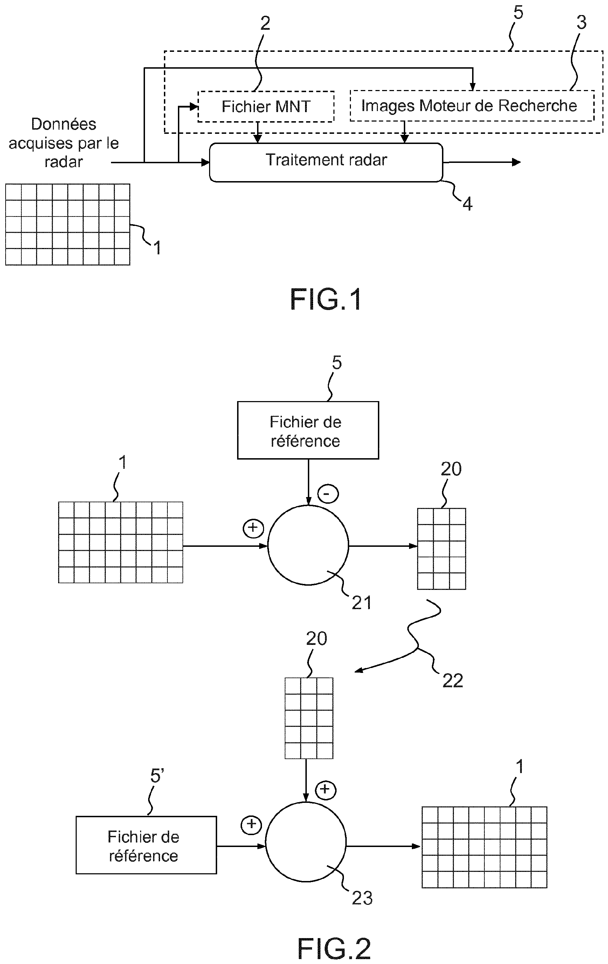

La figure 1 illustre le principe du procédé selon l'invention. L'invention exploite les données externes 2, 3 pré-enregistrées issues d'autres sources que la captation radar et couple ces données aux données d'images SAR acquises par le radar, de manière à comprimer les images SAR.La façon dont sont comprimées les images SAR est présentée par la suite.
Les données externes utilisées sont des données représentatives du domaine couvert par le radar, elles sont connues *a priori.* Ces données sont par exemple :
- les données issues des fichiers MNT 2 (Modèle Numérique de Terrain) qui permettent d'obtenir l'information de présence de terre ou de mer, ainsi que l'altitude ;
- les images 3 fournies par un moteur de recherche qui permettent, à travers la texture des images, de connaître la présence d'infrastructures particulières telles que les routes, les ouvrages d'art, certains bâtiments, les ports ou les aéroports notamment.

Plus particulièrement, l'invention utilise les données externes de façon partagée entre le système en vol et le système au sol. Un fichier de référence comportant les données MNT et d'autres données externes, par exemple les données d'images du moteur de recherche, est partagé entre le système en vol et le système au sol. Plus précisément, un premier fichier de référence 5 est présent dans le système en vol et un deuxième fichier 5', comportant les mêmes données représentatives, est accessible pour le système au sol, il est par exemple intégré dans le système au sol. Ce deuxième fichier 5' est présenté en figure 2.

La figure 2 illustre le principe de compression du procédé selon l'invention par l'exploitation du fichier de référence 5, 5' partagé.
Dans une première étape, on réalise un changement de format de l'image SAR pour la rendre apte à être comparée aux données représentatives du domaine couvert par le radar, ces données représentatives étant dans le fichier de référence.
Dans une étape suivante, on compare 21 les données 1 de l'image SAR ainsi formatée avec les données représentatives pour obtenir une image différentielle 20. Cette image différentielle 20 constitue l'image compressée, destinée à être transmise 22 au sol.
L'image SAR produite par le système au sol est reconstituée 23 à partir de cette image différentielle 20 (différence entre l'image SAR captée et les données représentatives embarquées) et des mêmes données représentatives accessibles au sol, comprise dans le fichier de référence 5'. Plus précisément, l'image différentielle 20 complète les données représentatives accessibles au sol pour reconstituer l'image SAR. Ainsi, on a seulement transféré cette image différentielle 20 pour finalement produire l'image complète au sol.
L'invention permet donc avantageusement de minimiser la bande passante nécessaire pour transférer les informations nécessaires à la production de l'image SAR au sol.
Le codage de l'image s'effectue en différentiel par rapport à un référentiel partagé, par exemple le référentiel des données MNT.

En pratique, la comparaison est effectuée entre l'image SAR représentée en coordonnées cartésiennes et les données représentatives du fichier de référence embarqué. Les données transmises au sol, pour produire l'image SAR dans le système au sol, sont le résultat de cette comparaison formant l'image différentielle 20 comme indiqué précédemment.La comparaison et la formation de l'image différentielle sont, par exemple, réalisées par le traitement radar 4 qui exploite les données SAR 1 et les données externes 2, 3 issues du fichier de référence 5 embarqué.

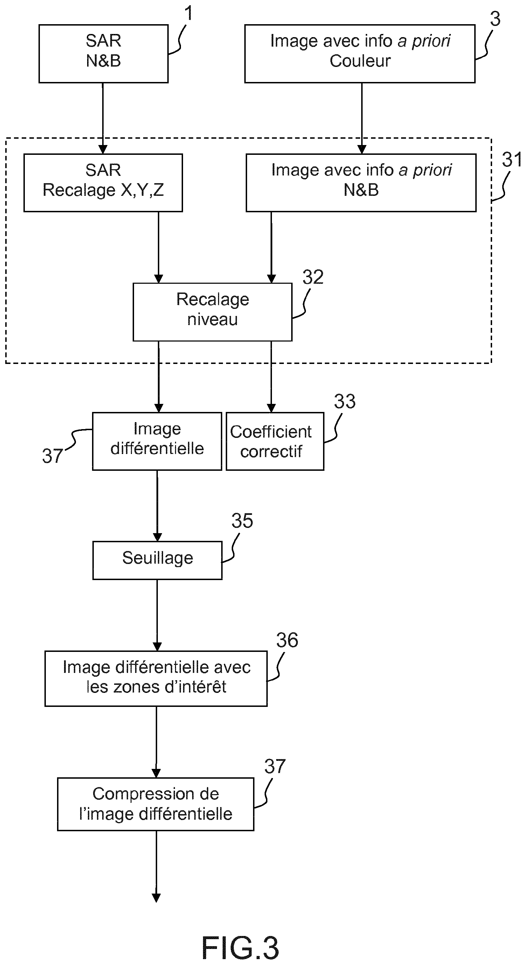

La figure 3 illustre un exemple de réalisation de cette comparaison. Dans cet exemple, on utilise les données 3 d'une image couleur, connue *a priori,* issue d'un moteur de recherche, les données MNT étant par ailleurs utilisées. On part donc d'une image SAR 1 en noir et blanc et d'une image en couleur 3 fournie par le moteur de recherche, connue *a priori.*
La première étape 31 consiste à transformer l'image SAR dans un format permettant la comparaison avec l'image connue *a priori.* Cela se traduit dans ce cas particulier par placer les deux images 1, 3 dans un même référentiel de couleur, c'est-à-dire transformer l'image en image noir et blanc. Cela se traduit également par recaler les images en adaptant les échelles sur les dimensions cartésiennes X, Y, Z. Par exemple, des points singuliers peuvent être utilisés pour les changements de coordonnées.
Il est également possible de recaler l'image SAR par rapport aux autres images telles que les images MNT par exemple, par corrélation dans l'image.

Un autre exemple de mise en oeuvre consiste à réaliser des opérations de morphologie mathématique sur l'image SAR du type étirement, dilatation, et/ou utilisation d'un Laplacien d'ordre 1 pour déterminer les contours par rapport à un seuil moyen.
Les coordonnées X, Y, Z de l'image SAR sont, par exemple, obtenues par le système de géo-référencement de l'aéronef sur laquelle est embarqué le radar.
Un recalage 32 est fait par adaptation de la taille de l'image SAR au modèle MNT, ou autre, par étirement (changement d'échelle) des informations SAR correspondant au géo-référencement du MNT. Ensuite, une corrélation est faite entre les deux images afin d'homogénéiser les niveaux. Un coefficient de corrélation 33, correctif, ainsi qu'une image différentielle 37 sont obtenus.
Une mesure de différence entre les deux images, recalées, est réalisée. On obtient une carte de différences qui est analysée par rapport à des seuils 34. Les zones d'intérêt fortement différentes sont encodées pour être transmises.
Le seuil de détection de différence est un seuil en amplitude et en surface (aire) de manière à ne pas conserver que les cibles.
Ces zones d'intérêt, formant l'image différentielle 20, sont considérablement plus petites que l'image complète et sont les seules à être transmises avec leurs positions géo-référencées. L'image ainsi compressée 35 correspond par exemple à 10% de l'image radar. De plus, cette image compressée peut être à nouveau compressée 36 par des méthodes standards, JPEG ou autres.

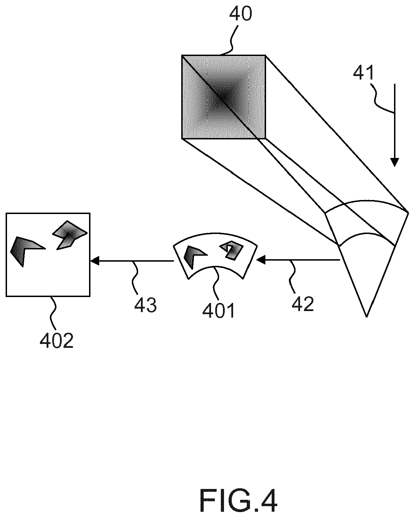

La figure 4 illustre la compression dans le cas d'une image électro-optique, une méthode équivalente à celle de la figure 3 pouvant être appliquée.
Afin de compresser une image électro-optique 40, cette dernière est transformée en niveaux de gris et mise à l'échelle. Le seuillage s'effectue de manière identique. Le résultat du seuillage est transmis en couleur. Dans une première phase 41, on effectue un changement de coordonnées. Dans une deuxième phase 42, on réalise l'obtention et le traitement de l'image différentielle par sélection des zones d'intérêt 401. Dans une troisième phase, on effectue un changement de coordonnées pour retrouver l'image différentielle 402 dans le repère d'origine.

Les données externes 2, 3, représentatives du domaine couvert par le radar et connues *a priori,* permettent également d'améliorer le traitement et aussi de faciliter le travail de l'opérateur dont la mission est notamment d'interpréter les images produites par le système au sol. En particulier, elles permettent de délivrer des images qui s'interprètent plus facilement, ne nécessitant pas une longue formation de l'opérateur. Plusieurs exemples de mise en oeuvre, décrites ci-après, illustrent l'exploitation avantageuse des connaissances *a priori* du domaine balayé par le radar, et notamment la comparaison entre l'image SAR et les images connues *a priori* fournies par exemple par un modèle MNT ou une image d'un moteur de recherche. Ces exemples montrent que le procédé selon l'invention permet avantageusement de sélectionner la résolution de l'image SAR en fonction des données représentatives connues *a priori.* La résolution doit être comprise ici comme l'aptitude de l'image à présenter ou mettre en évidence telle ou telle grandeur physique (cibles mobiles, routes, pylônes, bâtiments par exemple).

La connaissance *a priori* du terrain, domaine couvert par le radar, y compris ses reliefs, permet d'identifier des zones d'ombres et d'accentuer leurs traitements (meilleure résolution par exemple) sur les zones d'intérêt. L'information masquée par les ombres, souvent critiques en radar et en optique, est par exemple matérialisée par transparence à l'aide des informations *a priori.*
Un traitement différé sous un angle différent permet de combler ces zones d'ombres.
L'information *a priori* permet également d'identifier une cible mobile grâce à sa position aberrante sur l'image. Un étiquetage des cibles mobiles peut être réalisé afin de les mettre en valeur sur l'image radar et d'entrelacer un mode GMTI. Le pistage des cibles est alors amélioré par la connaissance a *priori* des routes.
Un objectif peut être d'adapter le nombre maximum de plots radar autorisés en fonction de l'environnement. Ainsi par exemple dans le cas d'une zone côtière, la présence d'une route entraînerait une augmentation du nombre de plots, car il peut y avoir plusieurs véhicules à pister.
La connaissance *a priori* du terrain permet également d'adapter ou de changer dynamiquement la polarisation de l'antenne du radar en fonction des structures à imager. Ainsi dans le cas d'un mode d'imagerie SAR, si on détecte des éléments avec des structures verticales, par exemple des pylônes ou des bâtiments notamment, on peut alors opter pour une polarisation verticale. Si à l'inverse, on détecte des objets avec des structures horizontales, telles que des lignes électriques, une polarisation horizontale peut être sélectionnée.
Dans le cas d'un mode d'imagerie SAR également, on peut dans un premier temps utiliser une forme d'onde basse résolution pour imager une grande zone et en fonction des zones d'intérêt, utiliser une forme d'onde haute résolution pour imager une zone plus sélective, zones à fortes différences entre l'image radar et l'image *a priori.*

Ces exemples impactent favorablement le travail de l'opérateur. L'invention permet en effet de placer les cibles d'intérêt sur une image unique, afin notamment de :
- diminuer la charge de l'opérateur ;
- diminuer le niveau d'expérience requis par l'opérateur ;
- faciliter l'interprétation des images radar.

Le procédé de compression et de décompression selon l'invention, minimisant fortement les flux de données transmises, permet donc également avantageusement d'améliorer le traitement des images et d'améliorer les conditions de travail des opérateurs. On peut ainsi banaliser et simplifier la formation des opérateurs qui peuvent ainsi plus se concentrer sur leur mission grâce à un moindre effort d'interprétation des images.
La superposition de l'image SAR et de l'image *a priori,* définie par exemple par les données du MNT 2 ou du moteur de recherche 3 permet avantageusement la constitution d'une image unique.

## Revendications

1. Procédé de compression et de décompression d'une image SAR (1) produite par un radar embarqué sur un aéronef, pour la transmission (22) de ladite image compressée vers un système reproduisant ladite image, **caractérisé en ce qu'**il utilise un premier fichier de référence (5) embarqué dans ledit aéronef et comportant des données représentatives (2, 3) connues a priori du domaine couvert par ladite image, un deuxième fichier de référence (5') comportant au moins les mêmes données représentatives étant accessibles audit système, ledit procédé réalisant :
- dans une première étape (31), un changement de format de ladite image pour la rendre apte à être comparée aux données représentatives (2, 3) ;
- dans une deuxième étape (34), une comparaison de ladite image avec lesdites données représentatives embarquées pour former une image différentielle (20) constituée de la différence entre les données de ladite image et lesdites données représentatives (2, 3) ;
l'image compressée transmise vers ledit système étant ladite image différentielle, l'image décompressée produite par ledit système étant constituée (23) à partir des mêmes données représentatives accessibles audit système et de ladite image différentielle, ledit changement de format se fait par le codage de l'image SAR par rapport à une image de référence issue des données représentatives par transformation en niveau de gris de l'image SAR puis par application d'un Laplacien sur les deux images et par ajustement d'échelle.

2. Procédé selon la revendication 1, **caractérisé en ce qu'**au moins une partie des données représentatives sont des données (2) d'un modèle numérique de terrain (MNT).

3. Procédé selon l'une quelconque des revendications précédentes, **caractérisé en ce qu'**au moins une partie des données représentatives sont des données (3) fournies par un moteur de recherche.

4. Procédé selon l'une quelconque des revendications précédentes, **caractérisé en ce qu'**il définit la résolution de ladite image décompressée en fonction desdites données représentatives connues *a priori.*

5. Procédé selon l'une quelconque des revendications précédentes, **caractérisé en ce que** ledit système est au sol.

6. Procédé selon l'une quelconque des revendications précédentes, **caractérisé en ce que** ladite image différentielle (20) est en outre compressée par une autre méthode de compression.

7. Radar de type aéroporté, **caractérisé en ce qu'**il est apte à mettre en oeuvre le procédé selon l'une quelconque des revendications précédentes.

## Patentansprüche

1. Verfahren zum Komprimieren und zum Dekomprimieren eines SAR-Bildes (1), welches durch einen an Bord eines Luftfahrzeugs mitgeführten Radar erzeugt wird, zur Übertragung (22) des komprimierten Bildes an ein System, welches das Bild reproduziert, **dadurch gekennzeichnet, dass** es eine erste Referenzdatei (5) verwendet, welche an Bord des Luftfahrzeugs mitgeführt wird und a priori bekannte repräsentative Daten (2, 3) des durch das Bild bedeckten Gebiets beinhaltet, wobei eine zweite Referenzdatei (5'), welche mindestens dieselben repräsentativen Daten beinhaltet, für das System zugänglich ist, wobei das Verfahren Folgendes bewerkstelligt:
- in einem ersten Schritt (31), eine Formatänderung des Bildes, um es in die Lage zu versetzen, mit den repräsentativen Daten (2, 3) verglichen zu werden;
- in einem zweiten Schritt (34), einen Vergleich des Bildes mit den an Bord mitgeführten repräsentativen Daten, um ein Differenzbild (20) zu bilden, welches aus der Differenz zwischen den Daten des Bildes und den repräsentativen Daten (2, 3) gebildet wird;
wobei das an das System übertragene, komprimierte Bild das Differenzbild ist, wobei das durch das System erzeugte, dekomprimierte Bild anhand derselben repräsentativen Daten, welche für das System zugänglich sind und anhand des Differenzbildes gebildet (23) wird, wobei die Formatänderung durch Codieren des SAR-Bildes anhand eines Referenzbildes erfolgt, welches den repräsentativen Daten durch Umwandlung der Graustufen des SAR-Bildes, gefolgt von der Anwendung eines Laplace auf beide Bilder und durch Maßstabsanpassung, entstammt.

2. Verfahren nach Anspruch 1, **dadurch gekennzeichnet, dass** mindestens ein Teil der repräsentativen Daten Daten (2) eines digitalen Geländemodells (MNT) sind.

3. Verfahren nach einem der vorhergehenden Ansprüche, **dadurch gekennzeichnet, dass** mindestens ein Teil der repräsentativen Daten Daten (3) sind, welche durch eine Suchmaschine bereitgestellt werden.

4. Verfahren nach einem der vorhergehenden Ansprüche, **dadurch gekennzeichnet, dass** es die Auflösung des dekomprimierten Bildes angesichts der a priori bekannten repräsentativen Daten definiert.

5. Verfahren nach einem der vorhergehenden Ansprüche, **dadurch gekennzeichnet, dass** das System am Boden befindlich ist.

6. Verfahren nach einem der vorhergehenden Ansprüche, **dadurch gekennzeichnet, dass** das Differenzbild (20) zudem durch ein anderes Kompressionsverfahren komprimiert wird.

7. Luftgestützter Radar, **dadurch gekennzeichnet, dass** er in der Lage ist, das Verfahren nach einem der vorhergehenden Ansprüche umzusetzen.

## Claims

1. A method for compressing and decompressing an SAR image (1) generated by a radar on board an aircraft, in order to transmit (22) said compressed image to a system reproducing said image, **characterised in that** it uses a first reference file (5) on board said aircraft and comprising representative data (2, 3) that is known a priori from the area covered by said image, with a second reference file (5'), comprising at least the same representative data, being available to said system, said method:
- in a first step (31), changing the format of said image so that it is able to be compared with the representative data (2, 3);
- in a second step (34), comparing said image with said on board representative data in order to form a differential image (20) formed by the difference between the data of said image and said representative data (2, 3);
the compressed image transmitted to said system being said differential image, the decompressed image generated by said system being formed (23) on the basis of the same representative data that is available to said system and of said differential image, said change of format being implemented by encoding the SAR image in relation to a reference image originating from the representative data through grey scale transformation of the SAR image, then by applying a Laplacian filter on the two images and by adjusting the scale.

2. The method as claimed in claim 1, **characterised in that** at least one part of the representative data is data (2) of a digital terrain model (MNT).

3. The method as claimed in any one of the preceding claims, **characterised in that** at least one part of the representative data is data (3) supplied by a search engine.

4. The method as claimed in any one of the preceding claims, **characterised in that** it defines the resolution of said decompressed image on the basis of said representative data that is known a priori.

5. The method as claimed in any one of the preceding claims, **characterised in that** said system is on the ground.

6. The method as claimed in any one of the preceding claims, **characterised in that** said differential image (20) is also compressed by another compression method.

7. Airborne type radar, **characterised in that** it is able to implement the method as claimed in any one of the preceding claims.
